Europäisches Patentamt

European Patent Office

Office européen des brevets

(11) Numéro de publication: **0 235 063**
A1

## (12) DEMANDE DE BREVET EUROPEEN

(21) Numéro de dépôt: 87440008.8

(22) Date de dépôt: 05.02.87

(51) Int. Cl.³: **B 67 D 1/14**
**F 16 K 3/24**

(30) Priorité: 05.02.86 FR 8601664

(43) Date de publication de la demande:
02.09.87 Bulletin 87/36

(84) Etats contractants désignés:
AT BE CH DE ES GB GR IT LI LU NL

(71) Demandeur: Brasseries KRONENBOURG Société dite :
S.A.
68, Rte d'Oberhausbergen
F-67200 Strasbourg(FR)

(72) Inventeur: Bazard, Daniel
9, rue du Birkenfels
F-67210 Obernai(FR)

(72) Inventeur: Huber, Jean
1, route Principale
Schaeffersheim(FR)

(72) Inventeur: l'Homme, Christian
62, route du Général Vandenberg
F-67140 Barr(FR)

(74) Mandataire: Metz, Paul
Cabinet METZ PATNI 95, rue de la Ganzau
F-67100 Strasbourg(FR)

(54) Robinet de tirage à la pression d'une boisson carbonatée notamment bière à mousse contrôlée.

(57) Robinet de tirage à la pression d'une boisson carbonatée notamment bière, comprenant un corps à chambre cylindrique de distribution (4) le long de laquelle se déplace un piston d'obturation (8) permettant de fermer ou d'ouvrir un orifice d'écoulement (14), caractérisé en ce que la chambre de distribution (4) possède en plus de l'orifice d'écoulement (14) de débit principal relié par un tube de débit princpal (18) au bec verseur (2), un orifice secondaire de plus faible diamètre relié par un conduit séparé au bec verseur (2) et obturable par le piston (8) après la fermeture de l'orifice (14) de débit principal, piston actionné en translation à partir de la manette (7) par un dispositif de commande (24).

Cette invention intéresse notamment les producteurs de bière et les fabricants de robinets de tirage pression.

EP 0 235 063 A1

- 1 -

La présente invention se rapporte à un robinet de tirage d'une boisson carbonatée notamment bière, à formation de mousse contrôlée.

Le principal attrait d'une bière dite "pression" réside principalement dans la forme et la tenue de son col de mousse.

Cet attrait constitue le premier plaisir du dégustateur averti et, considéré comme tel, le débitant professionnel ne manque pas d'exercer son savoir-faire et d'y apporter tout le soin nécessaire.

Or, si la manière de remplir le verre a son importance pour la quantité totale de mousse, le débitant ne peut jouer que très peu sur la qualité de la mousse, en ce qui concerne son aspect et sa tenue.

Le débitant y remédie dans une certaine mesure par le remplissage en deux temps : une première phase de remplissage rapide et un complément ultérieur sur le volume libéré par la disparition d'une partie de la première mousse.

La mousse restante est constituée par le mélange des deux quantités de mousse générées par les deux remplissages successifs.

On a essayé d'améliorer la qualité de la mousse en cherchant à former de la mousse à volonté après la phase de remplissage, en la rajoutant sur la masse liquide.

Selon ce mode de remplissage, on procède, à la manière britannique employée pour les bières dites "ale", c'est-à-dire en effectuant le remplissage avec le minimum de mousse pour déposer ensuite en partie supérieure du liquide une quantité de mousse présentant, par sa concentration, une garantie de tenue acceptable.

De nombreux dispositifs existent pour favoriser la formation de la mousse dans la bière au moment du tirage.

On a ainsi utilisé sur le trajet de la bière, dans l'organe de soutirage, divers éléments mécaniques de moussage tels que : plaque de cavitation, déviateur, goulot d'étranglement, plaque perforée, grille...

Malheureusement ces moyens tendent à produire une mousse trop abondante alors que la seule introduction d'un courant gazeux dans le conduit d'écoulement de la bière conduit à la formation d'une mousse peu dense et de courte durée.

A titre d'exemple illustratif, le brevet britannique n° 2 154 304 déposé conjointement par Southern Industries Croydon et Guinness Group se rapporte à un robinet de tirage de bière à la pression permettant, pour une position de la manette, d'effectuer un tirage pratiquement sans mousse, par mise en communication de l'orifice d'admission avec le conduit d'écoulement à travers un dispositif de réduction de la mousse. Dans ce même robinet, une voie différente correspondant à une deuxième position de la manette fait passer la bière à travers un disque de diffusion destiné à produire un liquide contenant en majorité de la mousse.

Ce dispositif est appelé à apporter la panache de mousse dans une deuxième phase de remplissage sur un liquide pratiquement exempt de mousse, ce qui correspond bien à la façon anglaise de servir la bière.

Un autre exemple de robinet destiné à former une quantité de mousse séparément est décrit dans le brevet français n° 2 002 859 correspondant à un brevet d'origine britannique déposé par la société GASKELL & CHAMBERS Ltd.

Dans ce robinet distributeur, le corps du clapet plongeur destiné à délivrer directement la bière provenant de la conduite est pourvu d'un clapet secondaire coaxial communiquant avec une chambre annulaire intérieure en relation avec la chambre principale d'admission par plusieurs canaux radiaux. Ces canaux de faible section et la chambre annulaire dans laquelle ils débouchent, ont pour rôle de provoquer la compression-détente engendrant la turbulence nécessaire à la formation de la mousse. L'ouverture de ce clapet secondaire correspond à une position particulière de la manette de commande dans laquelle le passage principal de la bière est fermé.

On a également créé ici une voie particulière comportant des moyens mécaniques destinés à former de la mousse en haute concentration.

Ces dispositifs ne peuvent donner satisfaction dans de nombreux pays dans lesquels la formation de la mousse dans le verre doit exister dès le début du remplissage.

En effet, ce type de robinet a été conçu pour former la mousse séparément, après le remplissage proprement dit, en la rajoutant au-dessus du liquide. Cette méthode correspond d'ailleurs à deux positions distinctes de la manette de commande.

Outre la fonction spécialisée propre à ce type de robinet, on note plusieurs inconvénients caractéristiques :

. la mousse à haute concentration adhère aux parois du robinet après séchage : la sortie du robinet et certaines parties intérieures vont s'encrasser par des résidus de mousse ;

. les éléments mécaniques complexes et de faible section dont sont pourvus ces dispositifs sont difficiles à nettoyer et donc sources de dépôts et de contamination ;

. difficultés d'usinage et d'assemblage liées à l'existence de petites pièces et de petits diamètres;

. prix de fabrication élevé ;

. interventions de dépannage longues et onéreuses ;

. qualité médiocre de la mousse.

Dans le cadre des dispositifs de formation de mousse, on peut citer également le brevet français n° 2 186 954 WHITBREAD Ltd d'origine britannique se rapportant à une génération de mousse à volonté par l'utilisation d'un générateur-transducteur d'ultrasons auxquels est soumis, soit directement, soit indirectement, un faisceau de conduits groupés à plusieurs installations, acheminant vers chaque robinet de distribution la bière sous pression.

L'effet des ultrasons sur la bière en écoulement dans ces conduits engendre dans le liquide des vibrations qui contribuent à la formation d'une mousse fine et de bonne stabilité.

Si l'utilisation de vibrations ultrasonores produit l'effet recherché, en ce qui concerne la qualité de la mousse et l'instant de sa formation, le générateur d'ultrasons et son transducteur constituent des organes fragiles et onéreux qu'il convient de protéger et d'entretenir.

Par ailleurs son prix de revient dépasse largement tous les produits équivalents.

En raison des deux principaux avantages à réunir simultanément sur un tel produit :

. qualité et aspect de la mousse,

. facilités apportées aux débitants pour le tirage et le service,

on comprend que ce type de dispositif ne peut susciter d'intérêt marqué et de nombreuses demandes de la part des professionnels des débits de boissons.

La présente invention a pour but de concilier les avantages apparemment contradictoires des réalisations antérieures en proposant un robinet de construction simple pour le tirage d'une boisson carbonatée, notamment de la bière dans lequel la qualité de mousse est assurée et la quantité contrôlable.

A cet effet, l'invention se rapporte à un robinet de tirage d'une boisson carbonatée notamment de la bière, comprenant dans le corps du robinet, un piston d'obturation mobile longitudinalement en mouvements rectilignes dans une chambre intérieure, entre une position dans laquelle le robinet est complètement fermé et une position de retrait dans laquelle le robinet est complètement ouvert, caractérisé en ce qu'il comprend, en plus du tube d'écoulement classique du bec verseur, au moins un conduit capillaire débouchant dans la chambre intérieure à proximité de l'orifice d'écoulement.

La présente invention présente, en plus des avantages généraux indiqués globalement ci-dessus, de nombreux avantages dont on n'énoncera ci-après que les principaux :

. qualité visuelle du produit à consommer ;

. stabilité supérieure de la mousse ;

. remplissage rendu plus facile ;

. simplicité mécanique ;

. toutes les parties intérieures sont parfaitement nettoyables ;

. économie de gaz carbonique ;

. intervention plus facile sur les conduits ;

. possibilité d'automatisation ;

. fabrication aisée.

Les caractéristiques techniques et d'autres avantages de la présente invention sont consignés dans la description qui suit, effectuée à titre d'exemple non limitatif sur un mode d'exécution en référence au dessin accompagnant dans lequel :

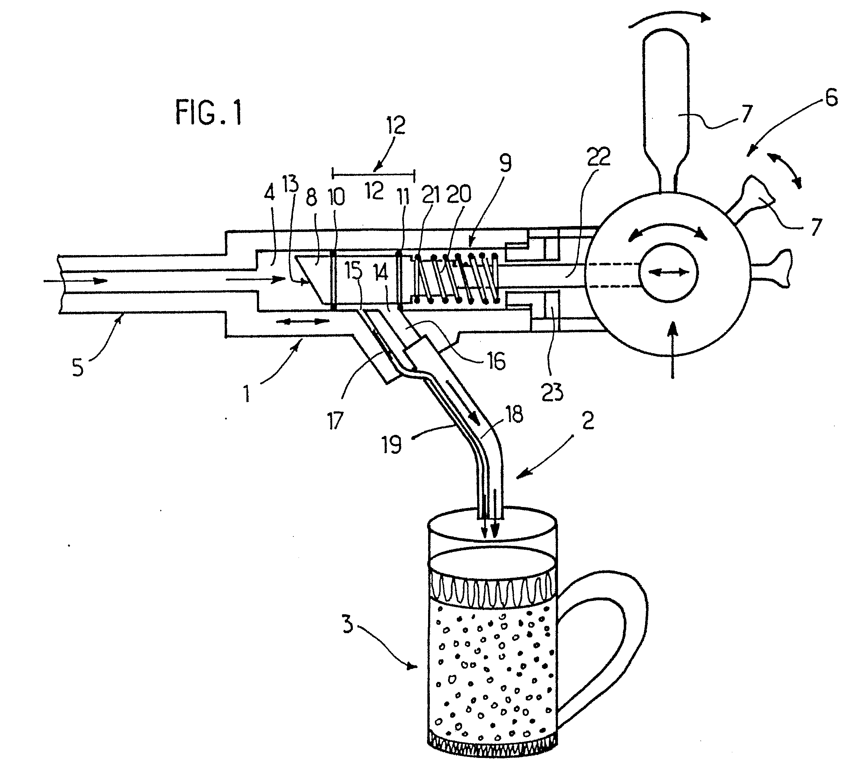

. La figure 1 est une vue schématique en coupe longitudinale en position fermée du mode de réalisation de base avec figuration symbolique de la commande du piston en mouvement de translation ;

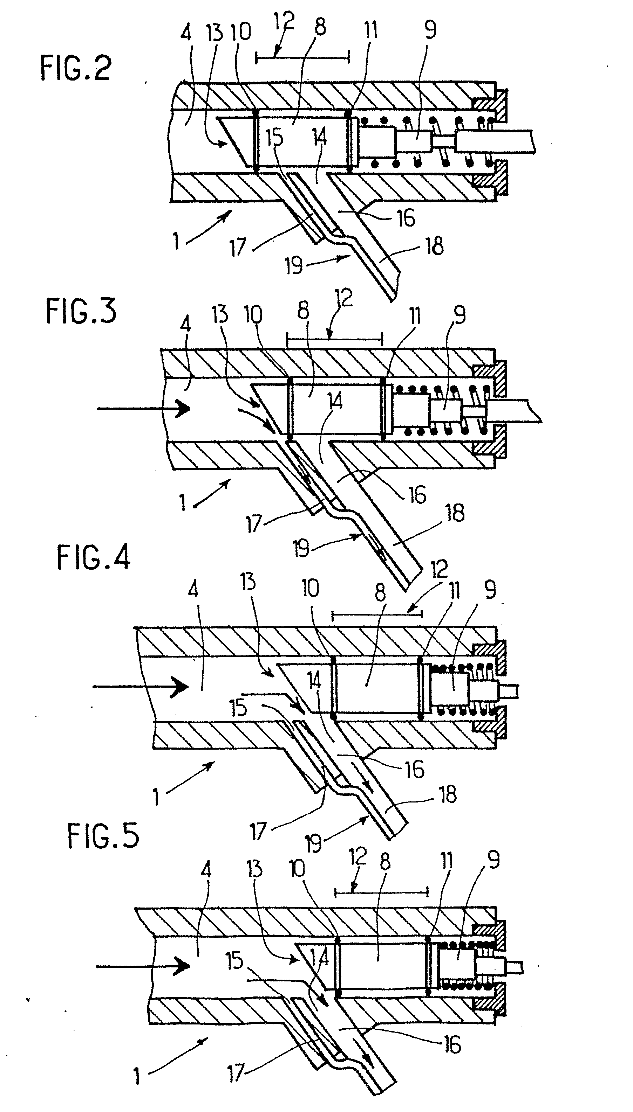

. les figures 2 à 5 sont des vues schématiques en coupes longitudinales illustrant le fonctionnement en position :

- fermée : figure 2 ;

- de débit capillaire : figure 3 ;

- intermédiaire, conduit partiellement ouvert, débit réduit, figure 4 ;

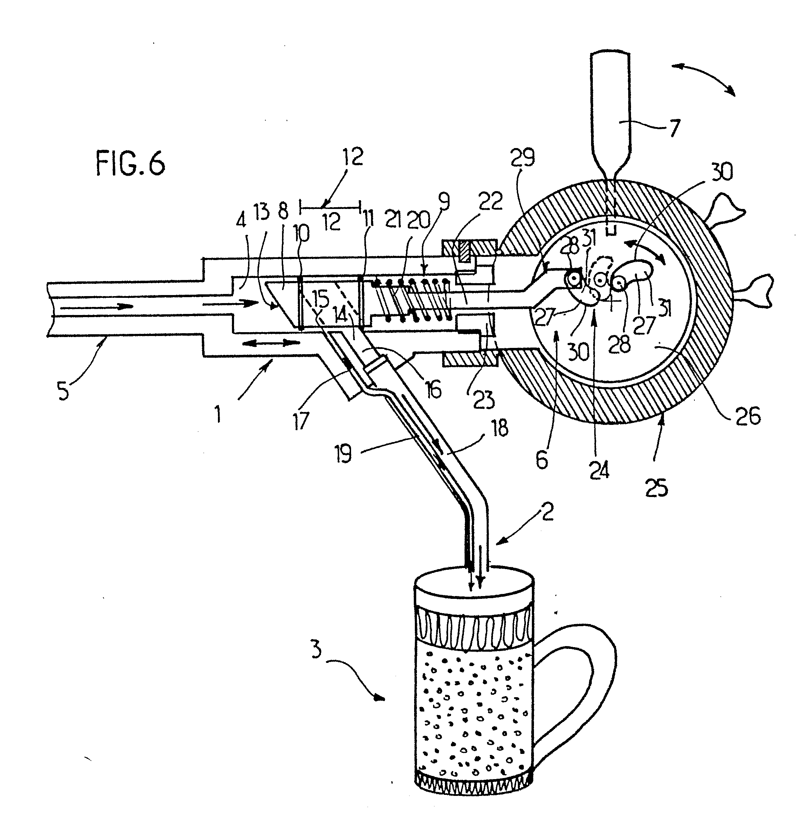

- plein débit, figure 5 ;

. la figure 6 est une vue en coupe longitudinale d'une réalisation à mécanisme de commande du mouvement par cavité excentrée et corps de commande circulaire ;

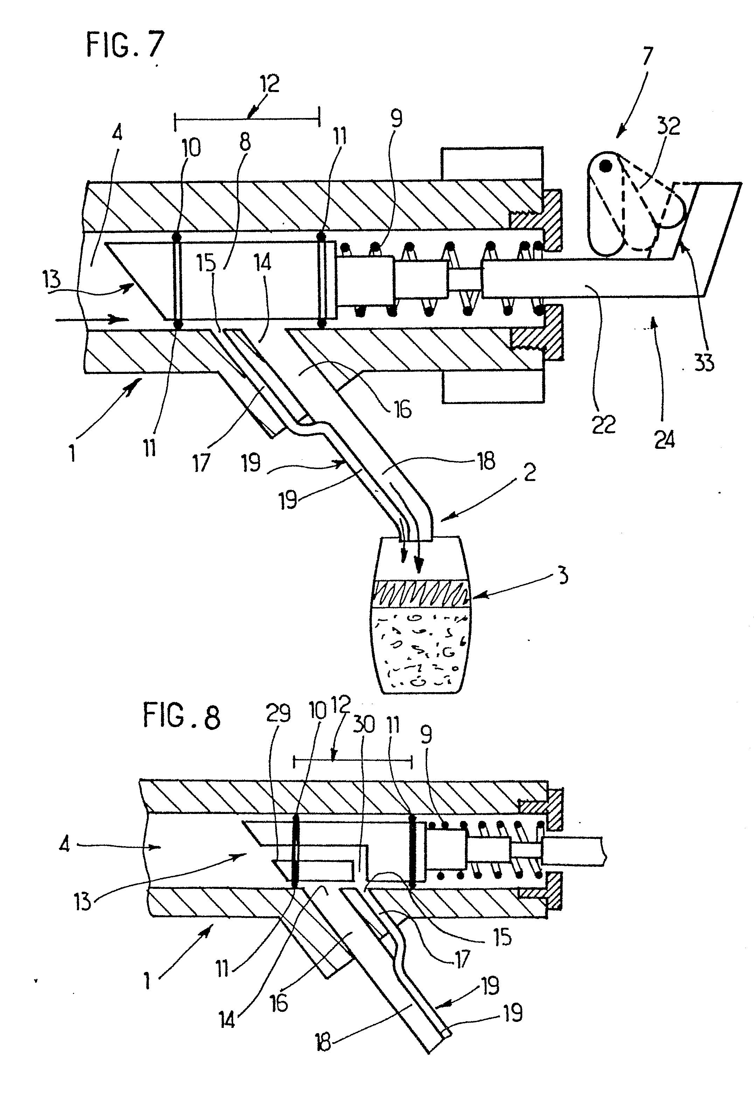

.la figure 7 est une vue schématique en coupe longitudinale en position fermée d'un mode de réalisation avec mécanisme de commande du mouvement du piston par basculement d'une pièce ;

. la figure 8 est une vue schématique en coupe longitudinale d'une variante selon laquelle l'orifice capillaire est disposé en aval de l'orifice de débit principal.

On adoptera ci-après la bière comme exemple de boisson. Il est bien entendu que la description portant sur une boisson particulière ne doit présenter aucun caractère limitatif, mais, qu'au contraire, toutes les boissons de mêmes propriétés et nécessitant les mêmes précautions entrent parfaitement dans son cadre.

Il en est de même en ce qui concerne la commande en mouvements rectilignes du piston à partir de la manoeuvre d'une manette.

L'idée générale inventive consiste à injecter dans la masse liquide du produit, dans un récipient partiellement rempli, par un jet fin sous pression, une petite quantité de bière destinée à engendrer un effet moussant supérieur pour la formation contrôlée d'une mousse de bonne qualité.

En cas de besoin, la séquence de débit capillaire engendrant le plein effet de formation de mousse peut être reprise à tout moment pendant le remplissage, en interrompant le débit principal pour n'autoriser que l'écoulement sous pression par le conduit capillaire formant le jet fin.

Plus précisément, le robinet de tirage à la pression d'une boisson carbonatée et plus particulièrement de bière selon l'invention comprend un corps de robinet 1 venant se raccorder à la conduite de distribution de l'installation. Ce corps de robinet comporte un bec verseur 2 monté transversalement sur le corps 1 ou légèrement en oblique pour délivrer de la bière dans un récipient 3, verre ou chope.

Le corps 1 du robinet présente une cavité sous la forme d'une chambre cylindrique de distribution 4 se terminant d'un côté par un embout fileté 5 de liaison avec la conduite de distribution de la bière provenant de l'installation, et du côté opposé, par une tête de commande 6 à manette 7 actionnée par le débitant, cafetier, barman ou autre. Dans cette chambre de distribution est monté coulissant un piston d'obturation 8 en rappel élastique de fermeture par un ressort de rappel 9 dont la force ne provoque qu'une simple assistance à la fermeture. Le piston est à peu près ajusté à la chambre de distribution 4. L'étanchéité est apportée par deux joints toriques 10 et 11, montés en série sur le corps du piston, décalés entre eux d'un intervalle. Le piston 8 possède une face frontale 13 biseautée, à pente dirigée vers le bec verseur 2, permettant un débit mieux équilibré en ouverture progressive.

La chambre de distribution 4 présente un orifice de débit principal 14 et un orifice secondaire, de plus faible section de passage appelé ci-après de débit capillaire 15. Bien entendu, la notion de capillaire doit être comprise ici de façon large. Ces orifices communiquent avec des canaux correspondants de débit principal 16 et de débit capillaire 17 débouchant, pour le premier, dans le tube 18 du bec verseur 2, dit tube de débit principal, et, pour le deuxième, dans un conduit capillaire 19 distinct du tube 18 au niveau de sa naissance mais pouvant y être intégré pour des raisons essentiellement pratiques et esthétiques.

Par ailleurs, les parois extérieures lisses du tube capillaire permettent un nettoyage parfait et ne constituent, en aucune façon, des surfaces d'incrustation sources d'infection bactériologique. Compte tenu de la vitesse rapide du liquide dans le capillaire, celui-ci est facilement nettoyé.

Diverses autres solutions existent : tube capillaire extérieur ou gainage.

Dans la version de base de l'invention, l'orifice de débit capillaire 15 est situé en amont, c'est-à-dire côté admission de la bière par rapport à l'orifice de débit principal 14. On verra ci-après que la disposition aval s'avère possible mais entraîne une modification du piston.

Par ailleurs, l'emplacement exact de l'orifice de débit capillaire pratiqué au travers de la surface latérale de la chambre de distribution 4 ne joue aucun rôle. Il suffit d'assurer par un conduit approprié et de forme adaptée la liaison avec le bec verseur 2 ou, de façon plus générale, de diriger le débit vers le verre à remplir.

Le corps du piston 8 est prolongé par une saillie cylindrique 20 délimitant un épaulement 21. Le ressort de rappel 9 est monté sur cette saillie, l'épaulement 21 servant de butée. Un axe de commande est solidaire de l'extrémité libre de la saillie 20. Il traverse un écrou d'obturation 23 et constitue la tige 22 de translation d'un dispositif de commande 24 du mouvement rectiligne.

Il s'agit de transformer le mouvement rotatif de la manette de commande 7, bien connue des utilisateurs en mouvement rectiligne de déplacement du piston.

Une des difficultés a consisté à augmenter suffisamment la course du piston pour permettre à son extrémité de balayer toute la zone délimitée par les orifices de communication de la chambre de distribution avec d'une part le conduit capillaire et d'autre part le tube de débit principal. Pour ce faire, la simple transformation des dispositifs de commande à came ne convenait pas.

Plusieurs dispositifs de commande peuvent être utilisés. On décrira ci-après deux exemples de moyens en référence aux figures 6 et 7.

La fonction générale consiste à transformer le mouvement rotatif de la manette en mouvement rectiligne de poussée ou de traction.

Une première forme de réalisation est représentée en figure 6. Le dispositif de commande 24 comprend un corps sphérique 25 dans lequel est entraînée en rotation, par la manette 7, une pièce circulaire de commande 26 qui comporte, débouchant sur sa face intérieure, une cavité profilée 27 dans laquelle vient s'engager un téton transversal 28 dont l'extrémité de la tige de poussée 22 est pourvue. L'extrémité 29 de la tige 22 est décalée vers le haut.

La cavité profilée 27 présente des chants curvilignes avant 30 et arrière 31 de forme adaptée réalisant, par exemple, un périmètre de forme allongée telle que représentée en figure 6.

Le téton 28 se déplace le long des chants curvilignes avant 30 et arrière 31 de la cavité pour permettre la traction ou la poussée rectiligne du piston.

La figure 6 permet de se rendre compte des déplacements du téton dans la cavité et des déplacements corrélatifs rectilignes de la tige 22.

Afin de mieux illustrer le fonctionnement général, on a représenté également les positions correspondantes de la manette 7

Un dispositif simplifié de commande 24 est représenté sur la variante de la figure 7. Selon ce dispositif, le mouvement rectiligne du piston est provoqué par le basculement d'une pièce profilée 32 contre une rampe oblique 33 dont la tige 22 du piston 9 est pourvue à son extrémité libre.

Bien que constituant une solution moins intéressante, on peut envisager de placer l'orifice capillaire 15 du côté aval de l'orifice 24 de débit principal, c'est-à-dire du côté de la commande.

Cette variante est illustrée schématiquement par la figure 8. Elle impose une configuration différente du piston. Pour ce faire, on peut envisager un piston 9 à passage intérieur 34 débouchant sur sa face avant 13 et communiquant avec une cavité 35 de préférence de faible ouverture s'ouvrant dans la chambre de distribution 5 au droit de l'orifice capillaire 15 en position de débit capillaire.

Pour éviter les fuites en débit capillaire, on prévoit sur le piston, de part et d'autre de l'ouverture de la cavité 35, un joint torique 36, 37.

On expliquera maintenant les différentes phases du fonctionnement du robinet de tirage selon l'invention en prenant pour exemple le mode de réalisation représenté en figure 6.

A partir de sa position fermée, on actionne progressivement la manette de commande 7 en ouverture par un mouvement vers le bas matérialisé par une flèche sur la figure 6.

Le mouvement rotatif de la pièce 26 coopérant avec le chant curviligne avant 30 de la cavité profilée 27 formant rampe de traction provoque le déplacement progressif du piston 9 vers l'arrière.

Le retrait progressif du piston découvre l'orifice capillaire 15 puis l'orifice de débit principal 14. La bière coule à débit normal engendrant un volume de mousse fonction de la méthode pratique de remplissage utilisée. On arrête le remplissage à un niveau satisfaisant concernant la quantité de bière et on forme pratiquement la totalité du volume de mousse par injection à l'aide du conduit capillaire d'une faible quantité de bière dans le liquide déjà versé. Le jet fin sous pression délivré par le conduit capillaire pénètre dans le liquide et forme une mousse de haute qualité.

Le remplisage du verre à débit principal se fait de préférence sans formation de mousse.

La présente invention concerne également le procédé de distribution d'une boisson carbonatée notamment de la bière à la pression selon lequel on forme, en fin de remplissage à débit principal, un jet secondaire par un conduit capillaire 19.

En fin de remplissage, lors de l'obturation de l'orifice 14 de débit principal et l'ouverture complète de l'orifice capillaire 15, ne subsiste qu'un débit capillaire donnant naissance à un jet fin sous pression pénétrant dans le volume de bière déjà versé pour y engendrer la formation d'une quantité principale de mousse.

L'invention a été décrite en détail ci-dessus, il est bien entendu qu'elle ne saurait se limiter aux moyens décrits, mais qu'au contraire, différentes variantes directes, modifications d'ordre secondaire, substitutions, adjonctions et suppressions de moyens ou matériaux sans apport inventif entrent parfaitement dans son cadre.

REVENDICATIONS

1. Robinet de tirage à la pression d'une boisson carbonatée notamment bière, comprenant un corps à chambre cylindrique de distribution (4) le long de laquelle se déplace en mouvements rectilignes, entre une position dans laquelle le robinet est complètement fermé et une position de retrait dans laquelle le robinet est complètement ouvert par l'obturation ou l'ouverture d'un orifice d'écoulement (14) en communication avec un bec verseur (2) caractérisé en ce que la chambre de distribution (4) possède, en plus de l'orifice d'écoulement (14) de débit principal, en communication avec le bec verseur (2) par un tube de débit principal (18), au moins un orifice secondaire (15) de plus faible diamètre, relié par un conduit séparé au bec verseur (2) et obturable par le piston (8) après la fermeture de l'orifice (14) de débit principal, piston actionné en mouvements rectilignes à partir de la manette (7) par un dispositif de commande (24).

2. Robinet selon la revendication 1, caractérisé en ce que l'orifice secondaire est un orifice capillaire (15) en communication avec un conduit capillaire (19) distinct du tube de débit principal (18).

3. Robinet selon la revendication 1, caractérisé en ce que le piston comporte une face frontale (13) en biseau, la pente étant dirigée vers les orifices d'écoulement principal (14) et secondaire (15).

4. Robinet selon les revendications 1 ou 2, caractérisé en ce que l'orifice capillaire (15) est situé en amont de l'orifice de débit principal (14).

5. Robinet selon les revendications 1 ou 2, caractérisé en ce que l'orifice capillaire (15) est situé en aval de l'orifice de débit principal (14).

6. Robinet selon la revendication 5 caractérisé en ce que le piston (8), présente une communication intérieure (34, 35) entre sa face avant et l'orifice capillaire (15) en correspondance avec ledit orifice en position de fermeture du débit principal.

7. Robinet selon la revendication 1, caractérisé en ce que l'étanchéité est assurée par deux joints toriques (10 et 11) montés sur le piston délimitant un intervalle (12) voisin de la longueur totale du piston.

8. Robinet selon l'une des revendications de 1 à 7, caractérisé en ce que le dispositif (24) de commande du mouvement rectiligne se compose d'une pièce profilée (32) montée basculante, agissant sur une rampe oblique (33) dont la tige (22) du piston est pourvue à son extrémité libre.

9. Robinet selon l'une des revendications de 1 à 7, caractérisé en ce que le dispositif (24) de commande du mouvement rectiligne se compose de la tige (22) du piston (8) à extrémité décalée vers le haut, pourvue d'un téton transversal (28) coopérant avec une cavité profilée (27) prévue dans la paroi d'une pièce circulaire de commande (26) solidaire de la manette (7) cavité présentant des chants curvilignes avant (30) et arrière (31) coopérant avec le téton (28) pour permettre la traction ou la poussée du vérin.

10. Procédé de formation de mousse à l'aide du robinet selon l'une quelconque des revendications précédentes, caractérisé en ce que l'on forme en fin de remplissage à débit principal, un jet secondaire sous pression par un conduit capillaire (19) après obturation de l'orifice (14) de débit principal, jet secondaire pénétrant dans le volume de bière déjà versé pour y engendrer la formation d'une quantité principale de mousse.

FIG.1

0235063

FIG.2

FIG.3

FIG.4

FIG.5

FIG.6

FIG. 7

FIG. 8

**0235063**

Numero de la demande

Office européen des brevets

**RAPPORT DE RECHERCHE EUROPEENNE**

EP 87 44 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | GB-A- 22 890 (TRAVERS)(A.D. 1909) <br> * Page 3, ligne 42 - page 4, ligne 8; figures 1-4 * | 1,2,4, 10 | B 67 D 1/14 <br> F 16 K 3/24 |
| Y | | 3,7-9 | |
| | --- | | |
| Y | FR-A-1 218 111 (GIAMPIERI) <br> * Page 1, colonne 2, ligne 37 - page 2, colonne 1, ligne 19; figures 2,3 * | 3,7 | |
| | --- | | |
| Y | FR-A-1 297 756 (BP) <br> * Page 2, colonne 2, lignes 46-50; figure 1 * | 8 | |
| | --- | | DOMAINES TECHNIQUES RECHERCHES (Int. Cl.4) |
| Y | FR-A-1 313 302 (MAIRE) <br> * Page 1, colonne 2, lignes 16-40; figure * | 9 | B 67 D <br> F 16 K |
| | ----- | | |

Le présent rapport de recherche a été établi pour toutes les revendications

| Lieu de la recherche <br> LA HAYE | Date d'achèvement de la recherche <br> 28-04-1987 | Examinateur <br> VROMMAN L.E.S. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82